# EUROPEAN PATENT APPLICATION

(11) **EP 3 435 305 A1**
(43) Date of publication of application: **30.01.2019**
(21) Application number: 16900014.8
(22) Date of filing: 20.06.2016
(51) Int. Cl.: G06Q 10/10, G06F 3/16, G06F 3/0488

(54) **METHOD AND DEVICE FOR CREATING TASK**

(30) Priority: 25.04.2016 CN 201610263982
(71) Applicant: ZTE Corporation, Shenzhen, Guangdong 518057 (CN)
(72) Inventor: XU, Yuanyuan, Shenzhen Guangdong 518057 (CN)
(74) Representative: AWA Sweden AB
(86) International application number: PCT/CN2016/086446
(87) International publication number: WO 2017/185504

(57) **Abstract**

A method for creating a task, comprising: acquiring a pressure value when a pressing operation is performed on a mobile terminal; when it is determined that the pressure value is greater than a first threshold value, creating a task corresponding to a current input voice according to the voice. The above scheme is adopted for solving a problem that steps of a process for creating a schedule event of the mobile terminal are relatively complicated and tedious, and achieving an effect of newly-creating a schedule event rapidly and conveniently.

## Description

### Technical Field

The present invention relates but is not limited to the field of communications, and in particular to a method and a device for creating a task.

### Background

In the existing art, a schedule function of a mobile terminal is very powerful, which includes various schedule event types, fields and the like, is in comply with a using standard of official business occasions, and forms a fixed schedule field standard, so that data exchange share and synchronization between devices are convenient. However the schedule function is actually used by a few people, instead most of the people are willing to simply write a few words for recording events on an actual calendar.

Because the use convenience degree of the schedule function of the mobile terminal is not enough, several steps are needed for completing a recording work of a schedule, and the use enthusiasm of a user is greatly reduced.

Standard schedule fields include Event name, Location, TIME (ALL DAY, Start, and End), REMINDERS, REPETITION, ACCOUNT, GUESTS (Send SMS to them), TIME ZONE, and Notes. In addition, another field Color has not a unified standard yet, each manufacturer may customize by itself (for example, the field may be set by supporting a local schedule.)

As for a problem that steps of a process for creating a schedule event of the mobile terminal are more complicated and tedious in the existing art, there is not an effective solution scheme yet currently.

### Summary

The following content is a summary of subjects described by the text in detail. The summary is not intended to limit the scope of protection of claims.

Embodiments of the present invention provide a method and a device for creating a task, and is intended to at least solve a problem in the existing art that steps of a process for creating a schedule event of the mobile terminal are relatively complicated and tedious.

According to an aspect of embodiments of the present invention, a method for creating a task is provided, which includes: a pressure value when a pressing operation is performed on a mobile terminal is acquired; when it is determined that the pressure value is greater than a first threshold value, a task corresponding to a current input voice is created according to the voice.

In an exemplary embodiment, the step that the task corresponding to the current input voice is created according to the voice includes: a volume value of the voice is detected; the volume value is compared with a preset volume threshold value, a comparison result is acquired; and a task corresponding to the comparison result is created.

In an exemplary embodiment, the step that the task corresponding to the comparison result is created includes: when the pressure value is greater than the first threshold value and less than a second threshold value, and the comparison result indicates that the volume value is less than the preset volume threshold value, a task type is acquired from the local mobile terminal, and a first type task corresponding to the task type is created; when the pressure value is greater than the first threshold value and less than the second threshold value, and the comparison result indicates that the volume value is greater than or equal to the preset volume threshold value, a first type task is created according to a content in the voice; and when the pressure value is greater than or equal to the second threshold value, a second type task corresponding to the comparison result is created.

In an exemplary embodiment, the second type task is a task with a reminding function.

In an exemplary embodiment, the task includes that: a schedule event is created.

In an exemplary embodiment, before the task corresponding to the voice is created according to the current input voice, the method further includes: an operating interface for receiving the pressing operation is determined, and a type of the task is determined according to a type of the operating interface.

In an exemplary embodiment, the task includes a schedule event; the step that the task corresponding to the voice is created according to the current input voice includes: when the operating interface of the pressing operation is a month view, a date corresponding to a pressing position of the pressing operation is acquired, and the schedule event is created at the date.

In an exemplary embodiment, the task includes a schedule event; the step that the task corresponding to the voice is created according to the current input voice includes: when the operating interface of the pressing operation is a week view or day view, a time point of a date corresponding to the pressing position of the pressing operation is acquired, and the schedule event is created at the time point of the date.

In an exemplary embodiment, after the task corresponding to the voice is created according to the current input voice, the method further includes: the task is displayed according to a color corresponding to the pressure value.

In an exemplary embodiment, after the task corresponding to the voice is created according to the current input voice, the method further includes: a sliding operation corresponding to the task is detected; when the sliding operation is detected, the task is moved to a position corresponding to the sliding operation for displaying.

In an exemplary embodiment, the step that the task is moved to the position corresponding to the sliding operation for displaying includes: when the mobile terminal is of a curved screen type, and the sliding operation is an operation of sliding towards an edge of the curved screen by using a label of the task as a starting point, the label of the task is moved to a side edge of the curved screen of the mobile terminal, and the label of the task is displayed on the side edge of the curved screen; when the sliding operation is an operation of sliding towards an inner side of the curved screen by using the label of the task as the starting point, the label of the task is moved out of the side edge of the curved screen, and the label of the task is displayed in other areas, except the side edge of the curved screen, on the curved screen.

According to another aspect of embodiments of the present invention, a device for creating a task is provided, and is applied to the mobile terminal. The creation device includes: an acquisition module, configured to acquire a pressure value when a pressing operation is performed on the mobile terminal; and a creation module, configured to, when it is determined that the pressure value is greater than a first threshold value, create a task corresponding to a current input voice according to the voice.

In an exemplary embodiment, the creation module includes: a detecting unit, configured to detect a volume value of the voice; a comparing unit, configured to compare the volume value with a preset volume threshold value, and acquire a comparison result; and a creating unit, configured to create a task corresponding to the comparison result.

In an exemplary embodiment, the creating unit is configured to, when the pressure value is greater than the first threshold value and less than a second threshold value, and the comparison result indicates that the volume value is less than the preset volume threshold value, acquire a task type from the local mobile terminal, and create a first type task corresponding to the task type; the creating unit is further configured to, when the pressure value is greater than the first threshold value and less than the second threshold value, and the comparison result indicates that the volume value is greater than or equal to the preset volume threshold value, create a first type task according to a content in the voice; the creating unit is further configured to, when the pressure value is greater than or equal to the second threshold value, create a second type task corresponding to the comparison result.

In an exemplary embodiment, the second type task is a task with a reminding function.

In an exemplary embodiment, the task includes that: a schedule event is created.

In an exemplary embodiment, the device further includes: a moving module, configured to, after the task corresponding to the voice is created according to the current input voice, detect a sliding operation corresponding to the task; and when the sliding operation is detected, move the task to a position corresponding to the sliding operation for displaying.

According to still another aspect of embodiments of the present invention, a mobile terminal is provided, which includes a pressure sensor and a processor, the pressure sensor is configured to acquire a pressure value when a pressing operation is performed on the mobile terminal, and the processor is configured to, when it is determined the pressure value is greater than a first threshold value, create a task corresponding to a current input voice according to the voice.

The embodiment of the present invention further provides a computer readable storage medium for storing computer executable instructions, which, when executed, implement the above method for creating the task.

Through embodiments of the present invention, a pressure value sensed by the mobile terminal is firstly detected, when the pressure value is detected to be greater than the first threshold value, namely in a case of a certain pressure, a new task is created, and according to the voice input at this moment, the new task is created. Thus, steps of creating the task (for example, a schedule event) are reduced, so that a problem that steps of a process for creating a schedule event of the mobile terminal are relatively complicated and tedious is solved, and an effect of newly-creating the schedule event rapidly and conveniently is achieved.

After accompanying drawings and detailed description are read and understood, other aspects may be understood.

### Brief Description of Drawings

The drawings illustrated herein are intended to provide a further understanding for the application, and form a part of the application. Illustrative embodiments and explanation of the application are intended to explain the application, and do not form improper limits to the application. In the drawings:
FIG. 1 is a hardware structure diagram of a mobile terminal of a method for creating a task according to an embodiment of the present invention.
FIG. 2 is a flow diagram of a method for creating a task according to an embodiment of the present invention.
FIG. 3 is a structure diagram 1 of a device for creating a task according to an embodiment of the present invention.
FIG. 4 is a structure diagram 2 of a device for creating a task according to an embodiment of the present invention.
FIG. 5 is a structure diagram 3 of a device for creating a task according to an embodiment of the present invention.
FIG. 6 is a flow diagram of a method for rapid schedule adding according to an embodiment of the present invention.
FIG. 7a is a detailed flow diagram 1 of a method for rapid schedule adding according to an embodiment of the present invention.
FIG. 7b is a detailed flow diagram 2 of a method for rapid schedule adding according to an embodiment of the present invention.

### Detailed Description

The application will be described in detail below with reference to drawings in conjunction with embodiments. It is to be noted that the embodiments of the application and the features in the embodiments may be combined with each other without conflict.

It is to be noted that the terms "first", "second", and the like in the drawings, specification and claims of the application are used to distinguish similar objects, but are not intended to specify a particular order or sequential order.

### Embodiment one

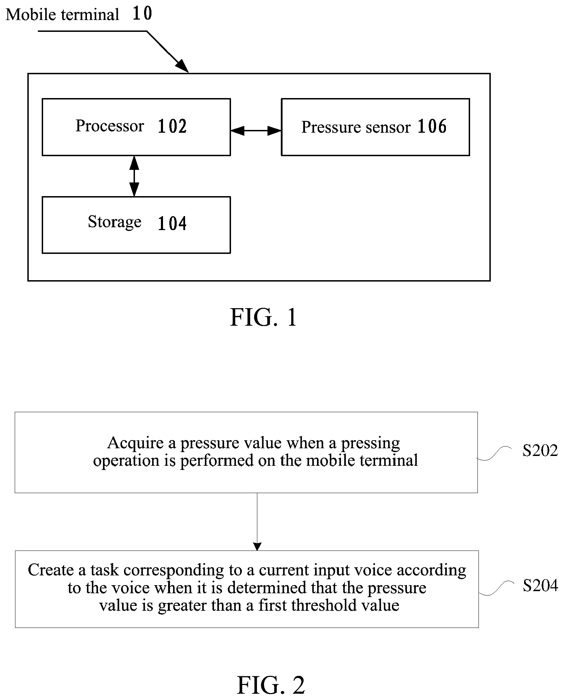

A method embodiment provided by the embodiment one of the application may be implemented in a mobile terminal, a computer terminal or similar computing devices. Taking execution on the mobile terminal as an example, FIG. 1 is a hardware structure diagram of a mobile terminal of a method for creating a task according to an embodiment of the present invention. As shown in FIG. 1, a mobile terminal 10 may include one or more (only one is shown in the figure) processors 102 (the processor 102 may include but is not limited to a processing device such as a microcontroller unit (MCU) or a field-programmable gate array (FPGA) and the like), a storage 104 for storing data, and a pressure sensor 106 for acquiring a pressure value. Those of ordinary skill in the art may understand that a structure as shown in FIG. 1 is just illustrative, but is not intended to limit a structure of the above electronic device. For example, the mobile terminal 10 may further include more or less components as shown in FIG. 1, or has a configuration different from what is shown in FIG. 1.

The storage 104 may be configured to store software programs and modules of an application software, for example, a program instruction/module corresponding to a method for creating a task in an embodiment of the present invention, the processor 102 executes various function applications and data processing through executing the software programs and the modules stored in the storage 104 to implement the method described above. The storage 104 may include a high-speed random access memory, and further includes a nonvolatile storage, for example, one or more magnetic storage devices, flash memory, or other nonvolatile solid-state storages. In some examples, the storage 104 may further include storages provided remotely relative to the processor 102, these remote storages may be connected to the mobile terminal 10 through a network. An example of the above network includes but is not limited to the Internet, an enterprise internal network, a local area network, a mobile communication network and a combination of them.

The pressure sensor 106 is configured to acquire a pressure value when a pressing operation is performed on the mobile terminal 10.

The processor 102 is configured to, when it is determined that the pressure value is greater than a first threshold value, create a task corresponding to a current input voice according to the voice.

An embodiment provides a method for creating a task implemented in the above mentioned mobile terminal, FIG. 2 is a flow diagram of a method for creating a task according to an embodiment of the present invention, as shown in FIG. 2, the method includes the following steps.

In step S202, a pressure value when a pressing operation is performed on the mobile terminal is acquired.

In an embodiment, the pressing operation performed on the mobile terminal may show that the pressing operation is performed on a touch screen of the mobile terminal.

In an embodiment, in the step S202 the above pressure value may be acquired through, but not limited to, a pressure sensor built in the mobile terminal.

In step S204, when it is determined that the pressure value is greater than a first threshold value, a task corresponding to the voice is created according to a current input voice.

The mobile terminal firstly acquires the pressure value, when the pressure value is detected to be less than or equal to the first threshold value, a common clicking operation is executed, when the pressure value is detected to be greater than the first threshold value (namely a heavy pressing operation), a task is created. The task may be a schedule event, by using the heavy pressing operation which is in an operating mode different from clicking and sliding in the existing art, the different heavy pressing operations are defined and associated with standard fields of the schedule event. Without affecting standard schedule fields, the use requirements of a user are satisfied, and the utilization rate of a schedule module may be improved.

In an embodiment, the steps for creating a task corresponding to the voice according to a current input voice may be as follows: a volume value of the voice is detected; the volume value is compared with a preset volume threshold value, and a comparison result is acquired; and a task corresponding to the comparison result is created.

In an embodiment, creating a task corresponding to the comparison result may include the following three cases.

When the pressure value is greater than a first threshold value and less than a second threshold value, and the comparison result indicates that the volume value is less than the preset volume threshold value, a task type is acquired from the local mobile terminal, and a first type task corresponding to the task type is created. When the created task is a schedule event, and the volume value is less than the preset volume threshold value, a preset name is written into an Event name field of the schedule event, for example, 'a rapid schedule'.

When the pressure value is greater than the first threshold value and less than the second threshold value, and the comparison result indicates that the volume value is greater than or equal to the preset volume threshold value, the first type task is created according to the content in the voice. When the created task is a schedule event, and the volume value is greater than or equal to the preset volume threshold value, a recording function of the mobile terminal is started, until a finger departs from the screen of the mobile terminal, the recording is stopped, the voice in the recording section is converted into characters and written in an Event name field of the schedule event.

When the pressure is greater than or equal to the second threshold value, a second type task corresponding to the comparison result is created, the second type task is a task with a reminding function. When the second type task is created, the volume value of a current input voice is acquired. When the volume value is small, a task type is acquired from the local mobile terminal, the second type task corresponding to the task type is created, and when the volume value is large, the second type task is named according to the content of the voice. When the task is the schedule event, and the pressure value is detected to be greater than or equal to the second threshold value, a time indicator dial is popped-up for selecting a certain time point by a user. After the time point is selected by the user, a REMINDERS field of the schedule event is automatically opened, and the schedule event is used as an ALL DAY schedule.

In an embodiment, the task may include creating a schedule event.

In an embodiment, before the task corresponding to the voice is created according to the current input voice, the method may further include: an operating interface for receiving the pressing operation is determined, the type of the task is determined according to the type of the operating interface. When the created task is the schedule event, the pressing operating interface may be a month view window (widget), and a month view, a week view and a day view of a schedule module.

When the operating interface of the pressing operation is the month view window (widget) and the month view, a square corresponding to a pressing position of the pressing operation is acquired, a date of the square is acquired, and the schedule event is created at the date, namely date information of the square is written into a Time field of the schedule event, the schedule event is stored as an ALL DAY type.

When the operating interface of the pressing operation is determined to be the week view or the day view, a time point of a date corresponding to the pressing position of the pressing operation is acquired, and the schedule event is created at the time point of the date. When the pressure value is greater than the first threshold value and less than the second threshold value, a Start time of the newly created schedule event is the time point of the square corresponding to the pressing operation, and an End time is 23:59. When the pressure value is greater than or equal to the second threshold value, a REMINDERS field of the created schedule event is automatically opened, and the Start time is written into the field as the reminding time.

In an embodiment, after the task corresponding to the voice is created according to the current input voice, the method may further include displaying the task according to a color corresponding to the pressure value. The task is the schedule event, the mobile terminal supports setting different colors of each schedule, more levels of the pressure values are customized and set to correspond to the setting of different colors (from the shallower to the deeper, or from a cool color to a warm color to express different event emergency degrees). When the user use the different pressure values to operate, namely different color labels are displayed on the schedule, a reminding effect may be achieved at a glance.

In an embodiment, after the task corresponding to the voice is created according to the current input voice, the method may further include: a sliding operation corresponding to the task is detected; when the sliding operation is detected, the task is moved to a position corresponding to the sliding operation for displaying.

When the mobile terminal is of a curved screen type, and the sliding operation is an operation of sliding towards an edge of the curved screen by using a label of the task as a starting point, the label of the task is moved to a side edge of the curved screen of the mobile terminal, and the label of the task is displayed on the side edge of the curved screen. When the sliding operation is an operation of sliding towards an inner side of the curved screen by using the label of the task as the starting point, the label of the task is moved out of the side edge of the curved screen, and the label of the task is displayed in other areas, except the side edge of the curved screen, on the curved screen. A better reminding effect is achieved by the user.

In an embodiment, an executive body of the above step may be, but is not limited to, the mobile terminal and the like.

### Embodiment two

The embodiment further provides a device for creating a task, the device is used for implementing the above embodiments and the optional implementation modes, and details are not described herein. As used below, the term "module" may implement a combination of software and/or hardware of a predetermined function. Although the device described in the following embodiments is better implemented in software, implementation in hardware or a combination of software and hardware is also possible and contemplated.

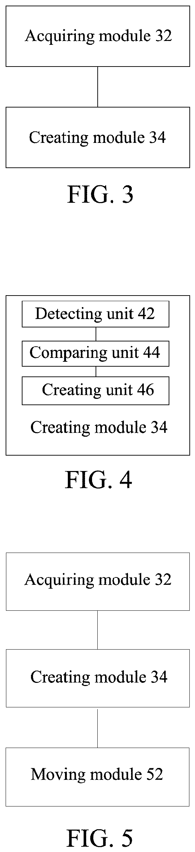

FIG. 3 is a structure diagram 1 of a device for creating a task according to an embodiment of the present invention, as shown in FIG. 3, the device includes an acquiring module 32 and a creating module 34.

The acquiring module 32 is configured to acquire a pressure value when a pressing operation is performed on a mobile terminal.

The creating module 34, connected with the acquiring module 32, is configured to, when the pressure value is determined to be greater than a first threshold value, create a task corresponding to a current input voice according to the voice.

FIG. 4 is a structure diagram 2 of a device for creating a task according to an embodiment of the present invention, as shown in FIG. 4, the creating module 34 includes a detecting unit 42, a comparing unit 44 and a creating unit 46.

The detecting unit 42 is configured to detect a volume value of the voice.

The comparing unit 44, connected with the detecting unit 42, is configured to compare the volume value with a preset volume threshold value, and acquire a comparison result.

The creating unit 46, connected with the comparing unit 44, is configured to create a task corresponding to the comparison result.

In an embodiment,
the creating unit 46 may be configured to, when the pressure value is greater than the first threshold value and less than a second threshold value, and the comparison result indicates that the volume value is less than the preset volume threshold value, acquire a task type from the local mobile terminal, and create a first type task corresponding to the task type.

The creating unit 46 may be further configured to, when the pressure value is greater than the first threshold value and less than the second threshold value, and the comparison result indicates that the volume value is greater than or equal to the preset volume threshold value, create the first type task according to the content in the voice.

And the creating unit 46 may be further configured to, when the pressure value is greater than or equal to the second threshold value, create a second type task corresponding to the comparison result.

In an embodiment, the second type task may be a task with a reminding function.

In an embodiment, the task may include creating a schedule event.

FIG. 5 is a structure diagram 3 of a device for creating a task according to an embodiment of the present invention, as shown in FIG. 5, the device further includes a moving module 52.

The moving module 52, connected with the creating module 34, is configured to, after the creating module 34 creates the task corresponding to the voice according to the current input voice, detect a sliding operation corresponding to the task; and when the sliding operation is detected, move the task to a position corresponding to the sliding operation for displaying.

It is to be noted that each of the above modules may be implemented by software or hardware. For the latter, it may be implemented by, but is not limited to, the following manners: the above modules are all located in the same processor; or, each of the above modules is located in a different processor in any combination respectively.

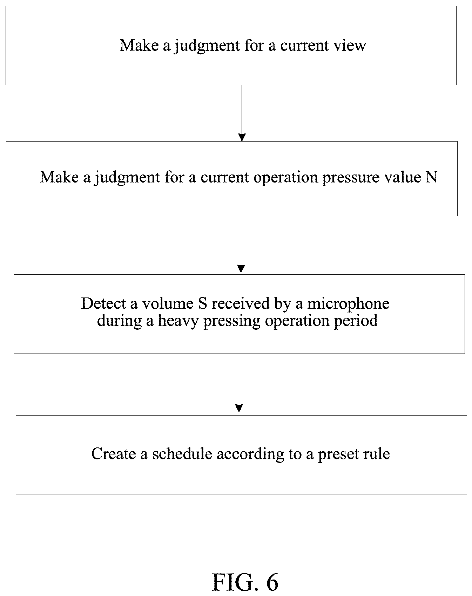

FIG. 6 is a flow diagram of a method for rapid schedule adding according to an embodiment of the present invention. As shown in FIG. 6, firstly, a judgment is made for a view interface of a current pressing operation, a size relation between a current operation pressure value N and a first threshold value N1 and a second threshold value N2 is determined. When the current operation pressure value N is greater than the first threshold value N1, namely a heavy pressing period, a volume value S received by a microphone is detected, and a schedule event is created according to a preset rule.

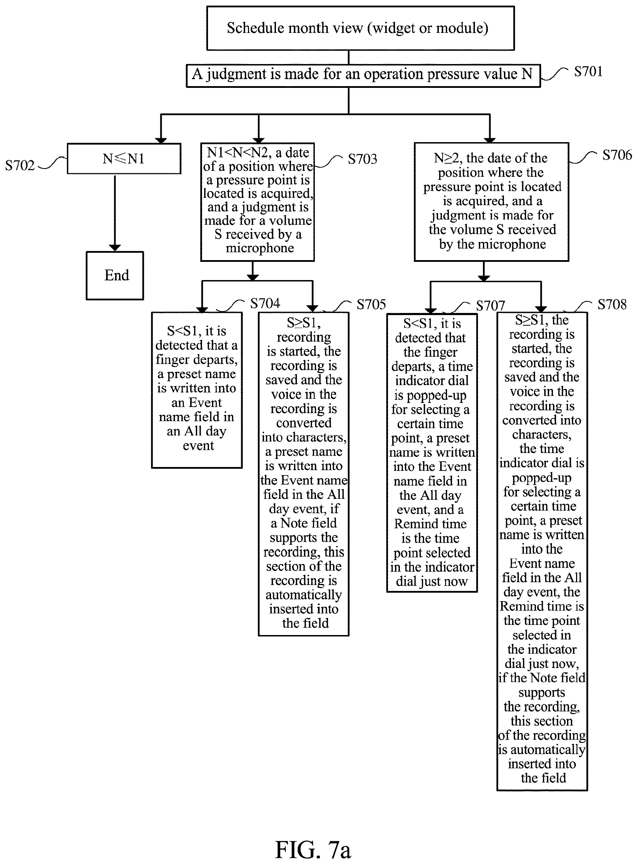

FIG. 7a is a detailed flow diagram 1 of a method for rapid schedule adding according to an embodiment of the present invention. As shown in FIG. 7a, the method includes the following steps S701-S708.

In step S701, a judgment is made for a size relation between an operation pressure value N and a preset threshold value, when the operation pressure value N is less than or equal to the first threshold value N1, step S702 is performed, when the operation pressure value N is between the first threshold value N1 and the second threshold value N2, step S703 is performed, and when the operation pressure value N is greater than or equal to the second threshold value N2, step S706 is performed.

In step S702, when the operation pressure value N is less than or equal to the first threshold value N1, a common operation is performed.

In step S703, when the operation pressure value N is between the first threshold value N1 and the second threshold value N2, a date of a position where a pressure point is located is acquired, and a judgment is made for a volume value S received by a microphone, when the volume value S is less than a preset volume threshold value S1, step S704 is performed, and when the volume value S is greater than or equal to the volume threshold value S1, step S705 is performed.

In step S704, when the volume value S is less than the volume threshold value S1, it is detected that a finger departs from a touch screen, a preset name is written into an Event name field of the schedule event, for example, 'a rapid schedule'.

In step S705, when the volume value S is greater than or equal to the volume threshold value S1, recording is started, the voice in the recording is converted into characters, the converted characters are written in an Event name field of the schedule event, if a Note field supports the recording, this section of the recording is automatically inserted into the field.

In step S706, when the operation pressure value N is greater than or equal to the second threshold value N2, the date of the position where the pressure point is located is acquired, and a judgment is made for the volume value S received by the microphone, when the volume value S is less than the volume threshold value S1, step S707 is performed, and when the volume value S is greater than or equal to the volume threshold value S1, step S708 is performed.

In step S707, when the volume value S is less than the volume threshold value S1, it is detected that the finger departs, a time indicator dial is popped-up for selecting a certain time point by a user, the preset name 'rapid schedule' is written into the Event name field, and a Remind time is the time point selected by the user.

In step S708, when the volume value S is greater than or equal to the volume threshold value S1, the recording is started, the recording is converted into characters, the time indicator dial is popped-up for selecting a certain time point, the character converted from the recording are written into the Event name field, the Remind time is the time point selected by the user, if the Note field supports the recording, this section of the recording is automatically inserted into the field.

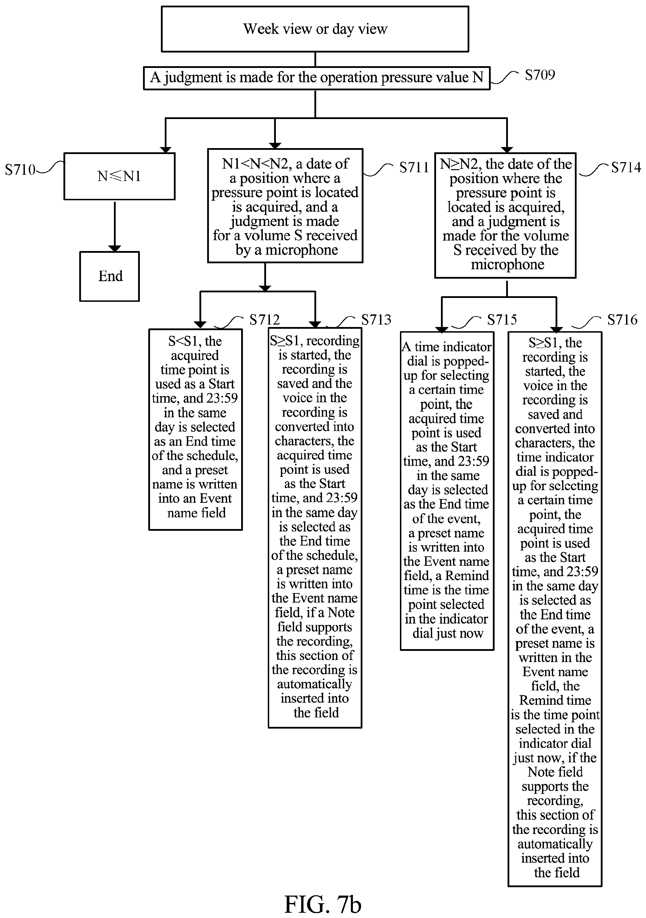

FIG. 7b is a detailed flow diagram 2 of a method for rapid schedule adding according to an embodiment of the present invention. As shown in FIG. 7b, the method includes the following steps S709-S716.

In step S709, a judgment is made for a size relation between an operation pressure value N and a preset threshold value, when the operation pressure value N is less than or equal to the first threshold value N1, step S710 is performed, when the operation pressure value N is between the first threshold value N1 and the second threshold value N2, step S711 is performed, and when the operation pressure value N is greater than or equal to the second threshold value N2, step S714 is performed.

In step S710, when the operation pressure value N is less than or equal to the first threshold value N1, a common operation is performed.

In step S711, when the operation pressure value N is between the first threshold value N1 and the second threshold value N2, a date and a time point of a position where a pressure point is located are acquired, and a judgment is made for a volume value S received by a microphone, when the volume value S is less than a volume threshold value S1, step S712 is performed, and when the volume value S is greater than or equal to the volume threshold value S1, step S713 is performed.

In step S712, when the volume value S is less than the volume threshold value S1, the acquired time point is used as a Start time, and 23:59 in the same day is selected as an End time, it is detected that a finger departs from a touch screen, a preset name is written into an Event name field of the schedule event, for example, 'a rapid schedule'.

In step S713, when the volume value S is greater than or equal to the volume threshold value S1, recording is started, the voice in the recording is converted into characters, the acquired time point is used as the Start time, and 23:59 in the same day is selected as the End time, the converted characters are written into the Event name field of the schedule event, if a Note field supports the recording, this section of the recording is automatically inserted into the field.

In step S714, when the operation pressure value N is greater than or equal to the second threshold value N2, the date of the position where the pressure point is located is acquired, and a judgment is made for the volume S received by the microphone, when the volume value S is less than the volume threshold value S1, step S715 is performed, and when the volume value S is greater than or equal to the volume threshold value S1, step S716 is performed.

In step S715, when the volume value S is less than the volume threshold value S1, it is detected that the finger departs, a time indicator dial is popped-up for selecting a certain time point by a user, the acquired time point is used as the Start time, and 23:59 in the same day is selected as the End time, the preset name 'rapid schedule' is written into the Event name field, a Remind time is the time point selected by the user.

In step S716, when the volume value S is greater than or equal to the volume threshold value S1, the recording is started, the recording is converted into characters, the time indicator dial is popped-up for selecting a certain time point, the acquired time point is used as the Start time, and 23:59 in the same day is selected as the End time, the characters converted from the recording are written into the Event name field of the schedule event, the Remind time is the time point selected by the user, if the Note field supports the recording, this section of the recording is automatically inserted into the field.

### Embodiment three

Through the description of the above implementation modes, those skilled in the art can clearly understand that the method according to the above embodiment may be implemented by means of software plus a necessary general hardware platform, and of course may also be implemented through hardware, but in many cases, the former is a better implementation. Based on such understanding, the scheme of the application, which is essential to or partially contributes to the existing art, may be embodied in the form of a software product. The computer software product is stored in a storage medium (such as ROM/RAM, a magnetic disk and an optical disc), including multiple of instructions used to cause a terminal device (which may be a mobile phone, a computer, a server, or network device, etc.) to implement the method in each embodiment of the application.

The embodiment of the present invention also provides a computer readable storage medium. Alternatively, in the present embodiment, the above computer readable storage medium may be configured to store a program code for performing the following steps S1 and S2.

In step S1, a pressure value when a pressing operation is performed on a mobile terminal is acquired.

In step S2, when it is determined that the pressure value is greater than a first threshold value, a task corresponding to a current input voice is created according to the voice.

In the embodiment, the computer readable storage medium may be further configured to store program codes for performing the steps of the method described in the above embodiments.

In the present embodiment, the storage medium may include, but is not limited to, various media capable of storing program codes such as USB flash drive, ROM, RAM, mobile hard disk, magnetic disk or optical disc.

In the present embodiment, the processor may perform the steps of the method described in the above embodiments according to the program codes stored in the storage medium.

The specific examples in the present embodiment may refer to the examples described in the above embodiments and alternative implementation modes, and details will not be repeated in the present embodiment.

It is apparent that those skilled in the art should understand that all modules or all steps of the application may be realized by using a generic computation apparatus, and may be centralized on a single computation apparatus or distributed on a network composed of multiple computation apparatuses. Alternatively, they may be realized by using executable program codes of the computation apparatuses. Thus, they may be stored in a storage apparatus and executed by the computation apparatuses, and in some cases, the shown or described steps may be executed in a sequence different from the sequence here, or they may be manufactured into various integrated circuit modules respectively, or multiple modules or steps therein are manufactured into a single integrated circuit module for implementing. Thus, the application is not limited to a combination of any specific hardware and software.

The above are only alternative embodiments of the application, and are not intended to limit the application, and those skilled in the art may make various modifications and changes on the application. Any modifications, equivalent replacements, improvements and the like made within the essence and principle of the application are intended to be included within the scope of protection of the application.

### Industrial Applicability

Embodiments of the application provide a creation and a device for creating a task, solves a problem that steps of a process for creating a schedule event of a mobile terminal are relatively complicated and tedious, and achieves an effect of newly-creating a schedule event rapidly and conveniently.

## Claims

1. A method for creating a task, comprising:
acquiring a pressure value when a pressing operation is performed on a mobile terminal; and
when it is determined that the pressure value is greater than a first threshold value, creating a task corresponding to a current input voice according to the voice.

2. The method according to claim 1, wherein creating the task corresponding to the current input voice according to the voice comprises:
detecting a volume value of the voice;
comparing the volume value with a preset volume threshold value, and acquiring a comparison result; and
creating a task corresponding to the comparison result.

3. The method according to claim 2, wherein creating the task corresponding to the comparison result comprises:
when the pressure value is greater than the first threshold value and less than a second threshold value, and the comparison result indicates that the volume value is less than the preset volume threshold value, acquiring a task type locally from the mobile terminal, and creating a first type task corresponding to the task type;
when the pressure value is greater than the first threshold value and less than the second threshold value, and the comparison result indicates that the volume value is greater than or equal to the preset volume threshold value, creating the first type task according to a content in the voice; and
when the pressure value is greater than or equal to the second threshold value, creating a second type task corresponding to the comparison result.

4. The method according to claim 3, wherein the second type task is a task with a reminding function.

5. The method according to claim 1, wherein the task comprises: creating a schedule event.

6. The method according to claim 1, wherein before creating the task corresponding to the current input voice according to the voice, the method further comprises:
determining an operating interface for receiving the pressing operation, and determining a type of the task according to a type of the operating interface.

7. The method according to claim 6, wherein the task comprises a schedule event; creating the task corresponding to the current input voice according to the voice comprises:
when the operating interface of the pressing operation is a month view, acquiring a date corresponding to a pressing position of the pressing operation, and creating the schedule event at the date.

8. The method according to claim 6, wherein the task comprises a schedule event; creating the task corresponding to the current input voice according to the voice comprises:
when the operating interface of the pressing operation is a week view or a day view, acquiring a time point of a date corresponding to a pressing position of the pressing operation, and creating the schedule event at the time point of the date.

9. The method according to any one of claims 1 to 8, after creating the task corresponding to the current input voice according to the voice, the method further comprises:
displaying the task according to a color corresponding to the pressure value.

10. The method according to claim 1, after creating the task corresponding to the current input voice according to the voice, the method further comprises:
detecting a sliding operation corresponding to the task; when the sliding operation is detected, moving the task to a position corresponding to the sliding operation for displaying.

11. The method according to claim 10, wherein moving the task to a position corresponding to the sliding operation for displaying comprises:
when the mobile terminal is of a curved screen type, and the sliding operation is an operation of sliding towards an edge of the curved screen by using a label of the task as a starting point, moving the label of the task to a side edge of the curved screen of the mobile terminal, and displaying the label of the task on the side edge of the curved screen; when the sliding operation is an operation of sliding towards an inner side of the curved screen by using the label of the task as the starting point, moving the label of the task out of the side edge of the curved screen, and displaying the label of the task in other areas, except the side edge of the curved screen, on the curved screen.

12. A device for creating a task, applied to a mobile terminal, comprising:
an acquiring module, configured to acquire a pressure value when a pressing operation is performed on a mobile terminal; and
a creating module, configured to, when it is determined that the pressure value is be greater than a first threshold value, create a task corresponding to a current input voice according to the voice.

13. The device according to claim 12, wherein the creating module comprises:
a detecting unit, configured to detect a volume value of the voice;
a comparing unit, configured to compare the volume value with a preset volume threshold value, and acquire a comparison result; and
a creating unit, configured to create a task corresponding to the comparison result.

14. The device according to claim 13, wherein
the creating unit is configured to, when the pressure value is greater than the first threshold value and less than a second threshold value, and the comparison result indicates that the volume value is less than the preset volume threshold value, acquire a task type locally from the mobile terminal, and create a first type task corresponding to the task type;
the creating unit is further configured to, when the pressure value is greater than the first threshold value and less than the second threshold value, and the comparison result indicates that the volume value is greater than or equal to the preset volume threshold value, create the first type task according to a content in the voice; and
the creating unit is further configured to, when the pressure value is greater than or equal to the second threshold value, create a second type task corresponding to the comparison result.

15. The device according to claim 14, wherein the second type task is a task with a reminding function.

16. The device according to claim 12, wherein the task comprises: creating a schedule event.

17. The device according to claim 12, wherein the device further comprises:
a moving module, configured to, after the creating module creates the task corresponding to the current input voice according to the voice, detect a sliding operation corresponding to the task, and when the sliding operation is detected, move the task to a position corresponding to the sliding operation for displaying.

18. A mobile terminal, comprising: a pressure sensor and a processor,
the pressure sensor is configured to acquire a pressure value when a pressing operation is performed on the mobile terminal; and
the processor is configured to, when it is determined that the pressure value is greater than a first threshold value, create a task corresponding to a current input voice according to the voice.
